# EUROPEAN PATENT SPECIFICATION

(11) **EP 0 489 158 B1**
(45) Date of publication and mention of the grant of the patent: **27.11.1996**
(21) Application number: 90909394.0
(22) Date of filing: 26.06.1990
(51) Int. Cl.: C05F 3/00

(54) **METHOD AND APPARATUS FOR MAKING ORGANIC FERTILIZER**
VERFAHREN UND ANLAGE ZUR HERSTELLUNG EINES ORGANISCHEN DÜNGEMITTELS
PROCEDE ET APPAREIL POUR FABRIQUER UN ENGRAIS ORGANIQUE

(43) Date of publication of application: 10.06.1992
(60) Divisional application: 94120470.3
(73) Proprietor: INOUE, Satoshi, Naka-gun, Kanagawa 255 (JP)
(72) Inventor: INOUE, Satoshi, Naka-gun, Kanagawa 255 (JP)
(74) Representative: Hiltl, Elmar, Dr.
(86) International application number: PCT/JP90/00825
(87) International publication number: WO 92/00259

(56) References cited:
- EP-A- 0 279 076
- EP-A- 0 286 758
- WO-A-80/01803
- WO-A-89/05784
- JP-B- 5 329 626
- JP-B- 5 423 136
- JP-U-58 121 349
- DATABASE WPI Section Ch, Week 7837, Derwent Publications Ltd., London, GB; Class D04, AN 76-78613X TSUMURI SODA KK 'raw materials prepn for compost ...' & JP-B-53 029 626 (TSUMURI SODA KK) 22 August 1978

## Description

The present invention relates to a device for manufacturing organic fertilizers by artificial treatments of livestock excrements, such as chicken or cattle manures with cellulose-containing organic materials such as grasses, hulls, straws, wood chips, etc. into organic fertilizers within a short time.

An enormous quantity of excrements exhausted from the large-scale livestock industry are left as such due to lack of appropriate treating methods, and environmental pollution caused by bad odor and discharge thereof without treatment have created a social problem.

In general, it requires 5 - 6 months to compost excrements of chicken, cattle, swine, etc., and cellulose-containing coarse organic materials used as beds thereof, such as grasses, straws, hulls, wood chips, etc., by leaving them as such in the nature. This is very inefficient and generates bad odor during that period. It has also been difficult to obtain evenly-fermented compost of good quality because of unevenness in fermentation between the surface and interior parts.

From WO-80/01803 there was known a process for the production of nutrient material wherein animal manure is mixed with paper shreds or cellulose fibres, followed by mincing and cutting the mixture, whereby it is heated by friction. Thereafter the mixture is comminuted. There is no teaching in this document that the moisture content of said mixture is of any importance and must be controlled.

In EP-A-0286758 there is described a screw mill which is used, for example, for producing calcium carbonate powder as a bulking agent for paper. The mill is provided with a cylindrical member wherein a screw is rotating. The material filled into the cylinder is pressed and passed forward by the screw within the cylinder at the end of which said material is ground into a fine powder between multi-stage vanes. The document does not mention the use of a second cylinder which might be provided for a specific purpose.

EP-A-0279076 discloses a device for mincing organic waste material, provided with at least two screws within one chamber. One of these screws has at least one mincing tool.

The object of the present invention is to provide a device for manufacturing composts of good quality within a short time.

The above object is met by a device for manufacturing organic fertilizers with a cylindrical treatment tank which is equipped with a hopper for feeding of raw materials on the rear end, with a screw conveying system and a kneading/cutting system inside, and with an opening, characterized in that said cylindrical treatment tank is provided as a primary treatment tank with a primary screw and a secondary screw, the latter being disposed close to an open/close gate of the primary treatment tank and rotating in a direction reverse to that of the primary screw, with the kneading/cutting system being provided between the primary screw and the secondary screw and consisting of multiple rotary blades provided on a rotary shaft and of multiple fixed blades projecting to the inside of the primary treatment tank and being close to or almost touching the corresponding rotary blades, with the open/close gate connected to said opening, and that there is further provided a secondary treatment tank which is equipped with an entrance connected to said open/close gate, with an opening for taking out products, with rotary blades for fine cutting inside.

The projection length of the multiple fixed blades is preferably adjustable.

A method for using the device of the present invention is in the European divisional application related with the present case.

An accelerated fermentation and a better result are obtained by adjusting the pH value of the mixture with a pH-adjusting agent since the pH value during the fermentation process should be in a range of pH 6 - 9, as well as by adjusting the moisture content of the mixture of livestock excrements and cellulose-containing organic materials, such as grasses, straws, hulls, wood chips, etc., to 25 - 75 %. This pH-adjusted mixture is cut and kneaded under elevated pressure and the temperature thereof is increased to 40 - 90° C by compression and friction caused by kneading. Then the treated mixture is released from the compressed state and exposed to air. The moisture adjustment is successfully performed by the addition of a previously prepared dry fertilizer.

The screw conveying system is composed of a main compressing screw which conveys raw materials toward the open/close gate, and with an auxiliary compressing screw for conveying the raw materials into the reverse direction.

The cutting/kneading system is composed of rotary blades on a rotary shaft and of fixed blades projecting to the inside of the primary treatment tank correspnding to the rotary blades.

The projection length of the fixed blades is preferably adjustable.

In the method of using the device of the present invention, the temperature of raw materials is elevated to 40 - 90° C by means of mechanical compression and kneading. Accordingly, microorganisms are activated by physical and thermal stimulations, and the cellulose-containing organic materials are crushed into small fragments by the compression and kneading. Therefore, the livestock excrements, which are the main nutrients for microorganisms, are evenly distributed. Thus the microorganisms are activated under suitable conditions for their growth, such as temperature, moisture, etc. Therefore, all microorganisms start their activities simultaneously and ferment the raw materials within a short time. In such a case, thermophilic microorganisms propagate quickly in the primary treatment tank and the number of the psychrophilic microorganisms decreases relatively. In the secondary treatment tank the aerobic microorganisms propagate abruptly since the treated material has been released from the compressed state and pulverized. Accordingly, the number of the anaerobic microorganisms decrease relatively.

Thus, the thermophilic microorganisms and the aerobic microorganisms, which are useful for fermentation, are activated and propagate quickly, and since the number of the psychrophilic microorganisms and of the anaerobic microorganisms which cause a bad odor decrease, composts of good quality and without a bad odor can be manufactured within a short time.

With said device of the present invention, the temperature of the materials in the primary treatment tank goes up due to the compression caused by the screw conveyor and by the cutting and kneading. The materials are abruptly released from an elevated pressure to a decreased pressure in the secondary treatment tank, and then pulverized with aeration in said tank. Thus, the raw materials can be treated and taken out as a compost after a single treatment by a series of devices.

Fig. 1 is a plane view of the device of the present invention for manufacturing organic fertilizer.

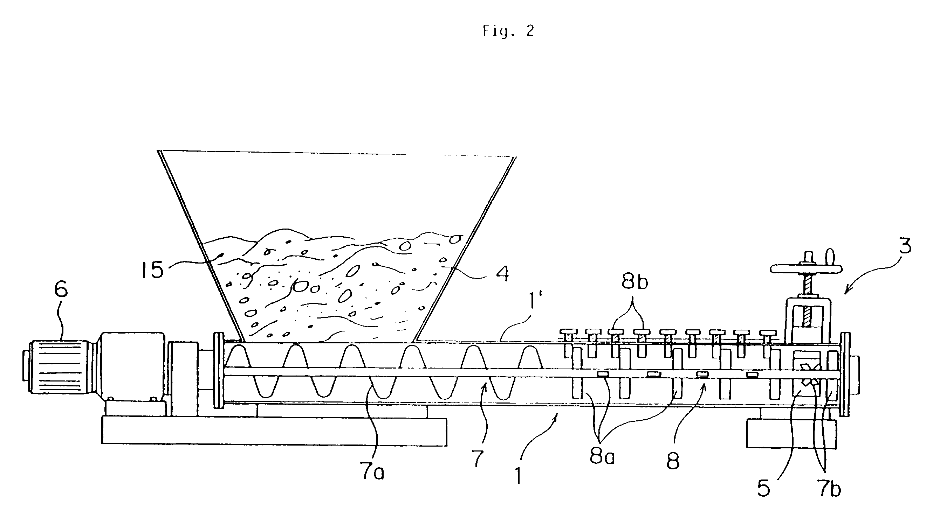

Fig. 2 is a cross section along the line II - II of Fig. 1.

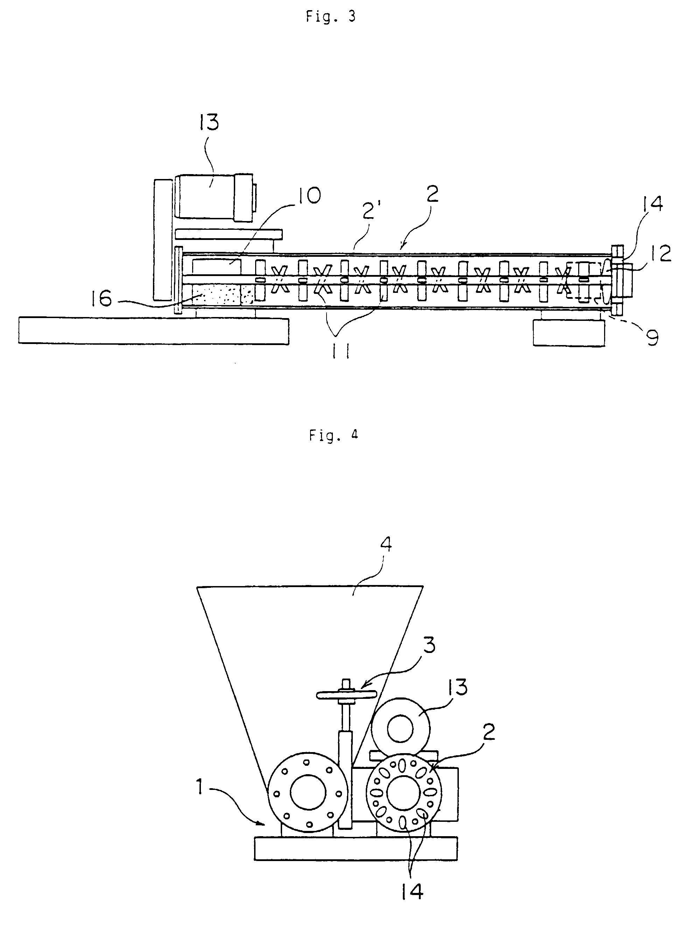

Fig. 3 is a cross section along the line III - III of Fig. 1.

Fig. 4 is a right-side elevation view of Fig. 1.

Fig. 5 is a temperature-time graph of the materials under treatment.

An example of the present invention is explained with the attached drawings below.

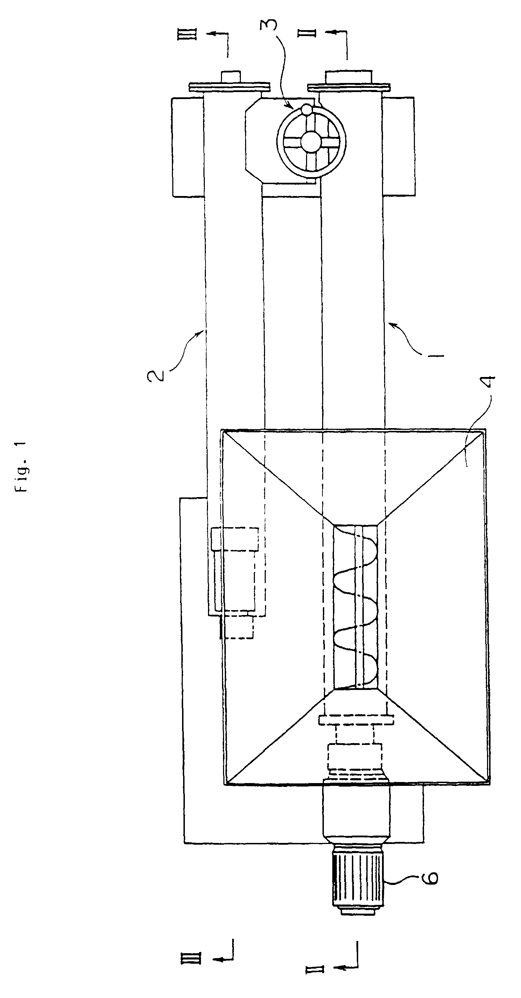

As shown in Fig. 1, the device for manufacturing organic fertilizers consists of a cylindrical primary treatment tank, and a cylindrical secondary treatment tank 2, both connected through an open/close gate 3.

The primary treatment tank 1 is equipped with a cylinder 1' and a hopper 4 for the impute of raw materials on the one end and with an opening 5 connected to an open/close gate 3 at the other end. Within the cylinder 1', a screw conveyor 7 driven by a motor or a similar system and a cutting/kneading system 8 are also provided. Although the screw conveyor 7 transports under compression the raw materials fed to the hopper 4 toward the open/close gate 3, it is equipped with a secondary screw 7b which rotates to the reverse direction compared with that of the primary screw 7a. A part of the primary screw 7a is located just below the hopper. This secondary screw is disposed close to the opening 5 of the primary treatment tank and faces the primary screw 7a, so that it further compresses the raw materials having been transported and compressed by the primary screw 7a.

The cutting/kneading system 8 is disposed next to the primary screw 7a, in other words, between the primary screw 7a and the secondary screw 7b.

The cutting/kneading system 8 consists of a number of blades 8a which are rotated by a driving system such as a motor, and of fixed blades 8b projecting into the primary treatment tank, corresponding to the rotary blades 8a.

The fixed blades 8b promote the shearing of raw materials by grinding them with the rotary blades 8a and prevent the corotating of the raw materials with the rotary blades 8a, and also act as baffle boards for the compressed transportation of the raw materials. The fixed blades therefore are preferably equipped in the primary treatment tank with a screw-driving system or similar means so that the fixed blades 8b can be driven forward and backward, which allows to control the temperature, caused by compression and friction, by adjusting the height of the fixed blades 8b.

The secondary treatment tank 2 consists of a cylindrical tank 2' which has an entrance 9, connected to the aforesaid open/close gate 3, on the one end, and an opening 10 for taking out products 16 on the other end. Within the cylinder 2' there are provided rotary pulverizing blades 11 which drive the treated materials toward the out-put opening 10 while pulverizing them. A ventilator 12 for taking air into the cylinder is provided on the side of the entrance 9.

In the drawings showing an example, both the rotary pulverizing blades 11 and the blower 12 are on the same rotary shaft driven by a motor 13, and reference numeral 14 is an opening for air intake for the blower 12. The use of the device of the present invention to manufacture composts is described below, with reference to the drawings.

First of all, livestock excrements, such as chicken feces, cattle/horse feces, etc. and cellulose-containing organic materials, such as grasses, straws, hulls and wood chips (preferably those having used as livestock beds) are taken as raw materials 15. The moisture content thereof is adjusted to 25% to 75%, and the moisture-adjusted raw materials 15 are fed to the primary treatment tank 1 through the hopper 4.

The raw materials 15 are transported by the primary screw 7a of the compressing transportation system 7, and finely crushed by the cutting/kneading system 8 on the way, where the cutting/kneading system, particularly the fixed blades 8b thereof act as baffle boards.

The raw materials transported by the primary screw 7a, are cut and kneaded while being compressed. Therefore the temperature is increased quickly due to the heat of compression and the heat of friction. Optionally, the intensity of the kneading friction, the quantity of raw materials to be transported etc., can be adjusted by adjusting the protection length of the fixed blades 8b. The temperature is further increased by elevating the internal pressure by using the secondary screw 7b.

Thus, the temperature of the raw materials 15 in the primary treatment tank 1 is elevated by compression and kneading, and mechanical and thermal stimulations activate the microorganisms. Therefore the fermentation is performed homogeneously and accelerated. Thermophilic microorganisms propagate because of the elevated temperature, and the psychrophilic microorganisms decrease in their number. As a result, a bad odor is suppressed.

The adjustment of the open/close gate 3 regulates the discharge of the treated materials whereby internal pressure and temperature are adjusted. Thus, the materials treated in the primary treatment tank by means of compression and kneading are heated to 40 - 90° C and then discharged through the open/close gate 3.

The high temperature materials discharged through the open/close gate 3 are transported into the secondary treatment tank 2. The treated materials are pulverized by high-speed rotary blades in the secondary treatment tank 2 while being contacted with air and thus evenly exposed to oxygen. As a result, aerobic microorganisms are activated and grow rapidly and accelerate the fermentation, by which bad odor is further suppressed because of the decrease of the number of anaerobic microorganisms.

Thus, the treated materials having been pulverized under aeration are discharged as an organic fertilizer 16 through the output opening 10.

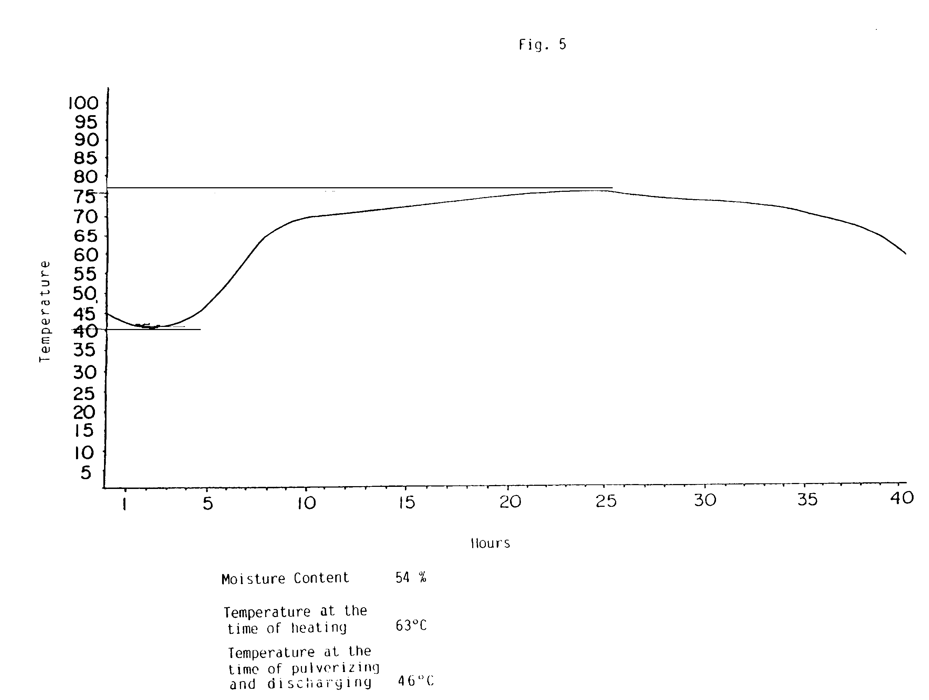

Fig. 5 shows a temperature-time graph of treated materials from the start to the end of fermentation when treated by the device of the present invention.

By the device of the present invention, as stated above, the temperature of the raw materials is suddenly elevated by mechanical compression, cutting and kneading, then the materials are released suddenly into a low pressure atmosphere, and are evenly exposed to oxygen by the contact with air while being pulverized. Therefore, microorganisms in the treated materials are activated because of physical and thermal stimulations, by which the fermentation is highly enhanced. Because of these reasons, composting is accomplished within only several days, otherwise it takes 5 - 6 months by conventional methods, and homogeneous fertilizers of good quality are obtained.

Because of the short treating time, no bad odor and waste water are generated since the number of mesophilic and anaerobic microorganisms is remarkably decreased, and because of the in-situ treatment of excrements the present invention contributes very much to the prevention of pollution and the improvement of the environment.

Furthermore, the resultant composts gave better results against root eelworm. The growth of microorganisms in the soil was also observed to be better than that obtained by the applications of composts produced by conventional devices, which had been prepared spending several months of time.

These facts show that the fertilizers prepared by the device of the present invention are less decomposed and contain more nutrients for soils, which enhance propagation of soil microorganisms. As a result thereof, parasitic microorganisms are suppressed and the number of harmful worms is decreased. The device of the present invention is very useful because the products obtained thereby accomplish the primary purpose of organic fertilizers.

## Claims

1. Device for manufacturing organic fertilizers with a cylindrical treatment tank (1) which is equipped with a hopper (4) for feeding of raw materials on the rear end, with a screw conveying system (7) and a kneading/cutting system (8) inside, and with an opening (5), characterized in that said cylindrical treatment tank (1) is provided as a primary treatment tank (1,1') with a primary screw (7a) and a secondary screw (7b), the latter being disposed close to an open/close gate (3) of the primary treatment tank (1,1') and rotating in a direction reverse to that of the primary screw (7a), with the kneading/cutting system (8) being provided between the primary screw (7a) and the secondary screw (7b) and consisting of multiple rotary blades (8a) provided on a rotary shaft and of multiple fixed blades (8b) projecting to the inside of the primary treatment tank (1) and being close to or almost touching the corresponding rotary blades (8a), with the open/close gate (3) connected to said opening (5), and that there is further provided a secondary treatment tank (2,2') which is equipped with an entrance (9) connected to said open/close gate (3), with an opening (10) for taking out products, with rotary blades (11) for fine cutting inside.

2. Device according to claim 1, characterized in that the projection length of the multiple fixed blades (8b) is adjustable.

3. Device according to claim 1 or 2, characterized in that the rear and of the secondary treatment tank (2,2') is equipped with a ventilator (12) for taking air into the secondary treatment tank (2,2').

## Patentansprüche

1. Vorrichtung zur Herstellung von organischen Düngemitteln mit einem zylindrischen Behandlungsbehälter (1), der ausgerüstet ist mit einem Trichter (4) zum Einspeisen von Ausgangsmaterialien am rückwärtigen Ende, mit einem Schneckenfördersystem (7) und einem Knet/Schneide-System (8) im Innern und mit einer Öffnung (5), dadurch gekennzeichnet, daß der zylindrische Behandlungsbehälter (1) mit einem primären Behandlungsbehälter (1, 1') mit einer primären und einer sekundären Schnecke (7a, 7b) versehen ist, wobei die letztgenannte Schnecke in der Nähe eines offenen/geschlossenen Tors (3) des primären Behandlungsbehälters (1, 1') angeordnet ist und sich in entgegengesetzter Richtung zur primären Schnecke (7a) dreht, wobei das Knet/Schneide-System (8) zwischen der primären Schnecke (7a) und der sekundären Schnecke (7b) vorgesehen ist und aus einer Mehrzahl von Drehflügeln (8a) an einer Drehwelle und aus einer Mehrzahl von fixierten Flügeln (8b), die zur Innenseite des primären Behandlungsbehälters (1) hin vorstehen und sich nahe bei den entsprechenden Drehflügeln (8a) befinden oder diese fast berühren, besteht, wobei das offene/geschlossene Tor (3) mit der Öffnung (5) verbunden ist, und daß ferner ein sekundärer Behandlungsbehälter (2,2') vorgesehen ist, der mit einem mit dem offenen/geschlossenen Tor (3) verbundenen Einlaß (9), mit einer Öffnung (10) zur Produktentnahme und mit innen angeordneten Drehflügeln (11) zum Feinschneiden versehen ist.

2. Vorrichtung nach Anspruch 1, dadurch gekennzeichnet, daß die vorstehende Länge der Mehrzahl von fixierten Flügeln (8b) einstellbar ist.

3. Vorrichtung nach Anspruch 1 oder 2, dadurch gekennzeichnet, daß das rückwärtige Ende des sekundären Behandlungsbehälters (2, 2') mit einem Ventilator (12) zur Zufuhr von Luft in den sekundären Behandlungsbehälter (2, 2') ausgerüstet ist.

## Revendications

1. Dispositif de fabrication d'engrais organiques comportant un réservoir de traitement cylindrique (1), lequel réservoir est équipé à l'extrémité arrière d'une trémie (4) d'alimentation en matières premières, d'un système de convoyage à vis (7) et à l'intérieur d'un système de malaxage/découpage (8), et d'un orifice (5), lequel système est caractérisé en ce que le réservoir de traitement cylindrique (1) en tant que réservoir de traitement primaire (1, 1') est muni d'une vis primaire (7a) et d'une vis secondaire (7b), cette dernière étant disposée à proximité immédiate d'un robinet-vanne ouvert-fermé (3) du réservoir de traitement primaire (1, 1') et qui tourne dans le sens inverse par rapport à la vis primaire (7a), avec le système de malaxage/découpage (8) étant pourvu entre la vis primaire (7a) et la vis secondaire (7b) et constitué d'un grand nombre de lames rotatives (8a) prévues sur une tige rotative et d'un grand nombre de lames fixes (8b) qui pointent vers l'intérieur du réservoir de traitement primaire (1) et étant à proximité immédiate ou presqu'en contact avec les lames rotatives (8a) correspondantes, avec le robinet-vanne ouvert-fermé (3) relié à ladite ouverture (5), et en ce qu'on prévoit de plus un réservoir de traitement secondaire (2, 2'), lequel réservoir est pourvu d'une entrée (9) liée audit robinet-vanne ouvert-fermé (3) avec un orifice (10) pour évacuer les produits, muni à l'intérieur de lames rotatives (11) pour un découpage fin.

2. Dispositif selon la revendication 1, caractérisé en ce que la longueur de projection du grand nombre de lames fixes (8b) est ajustable.

3. Dispositif selon la revendication 1 ou 2, caractérisé en ce que le côté arrière et le réservoir de traitement secondaire (2, 2') sont équipés d'un ventilateur (12) pour aspirer l'air dans le réservoir de traitement secondaire (2, 2').
